(19) Europäisches Patentamt
European Patent Office
Office européen des brevets

(11) Veröffentlichungsnummer: **0 501 425 A1**

(12) # EUROPÄISCHE PATENTANMELDUNG

(21) Anmeldenummer: **92103192.8**

(22) Anmeldetag: **25.02.92**

(51) Int. Cl.[5]: **B01D 69/10**, B01D 71/52, B01D 71/56, B01D 67/00

(30) Priorität: **28.02.91 DE 4106234**

(43) Veröffentlichungstag der Anmeldung: **02.09.92 Patentblatt 92/36**

(84) Benannte Vertragsstaaten: **BE CH DE ES FR GB IT LI NL**

(71) Anmelder: **HOECHST AKTIENGESELLSCHAFT**
**Postfach 80 03 20**
**W-6230 Frankfurt am Main 80(DE)**

(72) Erfinder: **Cherdron, Harald, Prof. Dr.**
**Eichenweg 40**
**W-6200 Wiesbaden(DE)**
Erfinder: **Krieg, Claus-Peter, Dr.**
**Im Mainfeld 42**
**W-6000 Frankfurt am Main 71(DE)**
Erfinder: **Schneider, Jürgen, Dr.**
**In der Kling 5**
**W-6273 Waldems/Ts.(DE)**
Erfinder: **Wildhardt, Jürgen**
**Am Südhang 32**
**W-6274 Hünstetten 2(DE)**

(54) **Poröse, chemikalien- und temperaturbeständige semipermeable Membran.**

(57) Semipermeable Membran für die Micro-, Nano- und Ultrafiltration bestehend aus einem Trägermaterial und einer auf diesem haftenden semipermeablen Schicht. Das Trägermaterial ist ein Gewebe oder ein Vlies auf der Basis eines Polyphenylensulfids, eines Polyetherketons oder eines Polyaramids. Zur Herstellung der semipermeablen Membran werden die Polymeren zunächst in einem Lösemittel gelöst, filtriert und entgast. In einem darauffolgenden Schritt wird nach dem Phaseninversionsverfahren eine Membran hergestellt, wobei als Lösemittel für Polyetherketone $H_2SO_4$, $CF_3$-$SO_3H$, HF, $Cl_2HC$-COOH oder eine Mischung von $Cl_2HC$-COOH und $H_2SO_4$ und für Polyaramide N-Methylpyrrolidon, Dimethylacetamid oder Dimethylformamid eingesetzt werden.

EP 0 501 425 A1

Seit der Einführung asymmetrischer Membranen aus Celluloseacetat durch Loeb und Sourirajan, (S. Sourirajan, Reverse Osmosis, Logos Press, London 1970) und aus hydrophoben Polymerisaten (US-A-3 615 024) sind zahlreiche Membranen, insbesondere für Separationen von in Wasser gelösten nieder- und hochmolekularen Bestandteilen entwickelt und vorgeschlagen worden, deren Struktur und Eignung in der Literatur angegeben ist (Desalination, 35 (1980), 5-20) und die auch in industrieller Praxis oder für medizinische Zwecke mit Erfolg erprobt wurden.

Viele von den beschriebenen Membranen haben zur Lösung spezifischer Aufgaben besonders vorteilhafte Eigenschaften. Infolge ihres chemischen Aufbaus und ihrer baulichen Struktur können die einzelnen Membranen jeweils nur für ganz spezielle Separationsprobleme optimal geeignet sein. Hieraus resultiert die grundlegende Forderung, für neue Aufgabenstellungen stets neue Membranen zu entwickeln.

In der EP-A-0 082 433 wird eine übersichtliche Darstellung über die Vor- und Nachteile bereits bekannter Membranen gegeben. So gibt es beispielsweise hydrophile, asymmetrische Membranen aus Celluloseacetat mit befriedigenden antiadsorptiven Eigenschaften, die aber bezüglich ihrer thermischen und chemischen Beständigkeit sehr zu wünschen übrig lassen. Membranen aus Polysulfonen oder ähnlichen Polymeren besitzen zwar eine gute thermische und chemische Beständigkeit, sind jedoch gegenüber der Einwirkung von organischen Lösemitteln empfindlich.

Hydrophilie und gleichzeitige Resistenz gegenüber Lösemitteln findet man bei Membranen aus Celluloseregenerat; diese sind aber in sauren oder alkalischen Medien relativ leicht hydrolysierbar, und darüber hinaus werden sie von Mikroorganismen schnell angegriffen.

Die DE-A-33 21 860 beschreibt chemisch beständige Membranen aus teilweise sulfoniertem Polyetherketon. Bei der Einwirkung von organischen Lösungsmitteln wie Aceton oder Tetrahydrofuran (THF) werden diese Membranen zwar nicht aufgelöst, sie quellen aber sehr stark auf und verändern dadurch irreversibel ihre Membraneigenschaften.

Um eine erhöhte mechanische Stabilisierung zu erreichen, werden die Membranen auf Geweben oder Vliesen aufgezogen. Die allgemein verwendeten Trägermaterialien bestehen aus Polypropylen oder Polyethylenterephthalat. Allerdings weisen derartige Trägermembranen den Nachteil auf, daß beispielsweise die Gebrauchstemperaturen, aufgrund der ungenügenden Temperaturbeständigkeit der Vliese oder Gewebe, erheblich erniedrigt werden. Ferner kommt es bei Einwirkung von organischen Lösungsmitteln, Säuren und Laugen zur Auflösung dieser Trägermaterialien oder zum Ablösen der Membran.

Der Erfindung liegt daher die Aufgabe zugrunde, semipermeable Membranen bereitzustellen, welche eine hohe Stabilität besitzen, die sowohl gegenüber verseifenden als auch gegenüber oxidativen Agenzien resistent sind, eine hohe Temperaturbeständigkeit aufweisen und von organischen Lösungsmitteln auch bei erhöhten Temperaturen noch nicht angegriffen werden.

Gelöst wird die Aufgabe durch eine semipermeable Membran bestehend aus einem Trägermaterial und einer auf diesem haftenden Schicht, wobei das Trägermaterial ein Gewebe oder ein Vlies auf der Basis eines Polyphenylensulfids, eines Polyetherketons oder eines Polyaramids ist. Die hier beschriebenen Membranen eignen sich insbesondere für die Mikro-, Nano- und Ultrafiltration.

Die auf dem Trägermaterial befindliche semipermeable Schicht kann bei den erfindungsgemäßen Membranen entweder aus einem Polyetherketon oder aus einem Polyaramid bestehen.

Die semipermeable Schicht und gegebenenfalls auch die Trägerschicht leitet sich von einem Polyetherketon mit den wiederkehrenden Einheiten der Formel (Ia) ab,

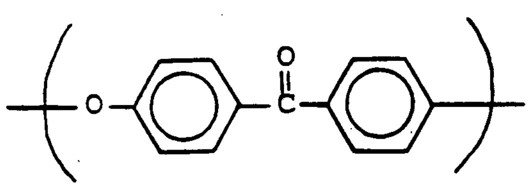

(Ia)

insbesondere von einem Polyetherketon mit den wiederkehrenden Einheiten der Formel (Ib)

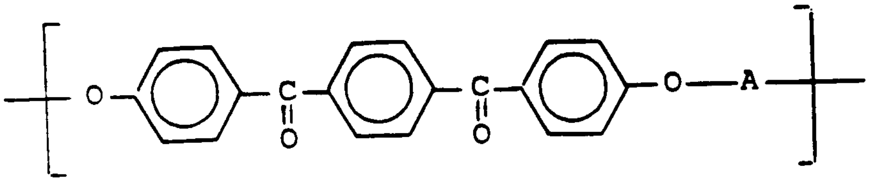

(Ib)

wobei -A- für einen Rest

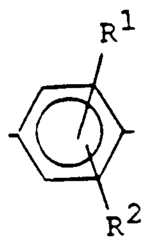

oder

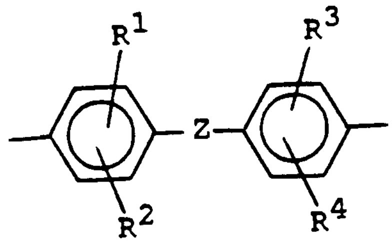

steht, worin

| | |
|---|---|
| $R^1$, $R^2$, $R^3$ und $R^4$ | gleich oder verschieden sein können und Wasserstoff eine ($C_1$-$C_4$)-Alkyl-, ($C_6$-$C_{14}$)-Aryl- oder ($C_6$-$C_{14}$)-Oxyaryl-Gruppe oder $NO_2$, CN, $NR^5$ ($R^5$ = ($C_1$-$C_6$)-Alkyl) oder Halogen bedeuten und |
| -Z- | eine der Gruppierungen |

$$-O-,\ -S-,\ -CH_2-,\ -CF_2-,\ -\overset{CH_3}{\underset{CH_3}{C}}-,\ -\overset{CF_3}{\underset{CF_3}{C}}-,\ -SO_2-\ \text{oder}\ -CO-$$

bedeutet.

Die Herstellung von Polyetherketonen z.B. durch nucleophile aromatische Polykondensation ist bekannt und in der EP-A-0-001 879 und der GB-A-1 414 421 beschrieben. Polyetherketone wie sie für die erfindungsgemäßen Membranen verwendet werden, werden beispielsweise in der prioritätsälteren, nicht vorveröffentlichten DE-A-39 36 997 beschrieben.

In einer weiteren bevorzugten Ausführungsform besteht die semipermeable Schicht und gegebenenfalls das Trägermaterial aus einem aromatischen Homo- oder Copolyamid mit mindestens einer der wiederkehrenden Struktureinheiten der Formel (II)

$$-(\overset{O}{\overset{\parallel}{C}} - E^1 - \overset{O}{\overset{\parallel}{C}} - NH - E^2 - NH)- \qquad (II)$$

in der $-E^1-$ und $-E^2-$ gleich oder verschieden sind und aus einer oder mehreren der Gruppierungen

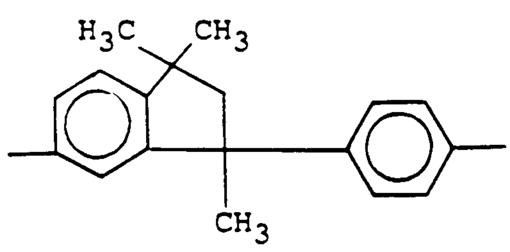

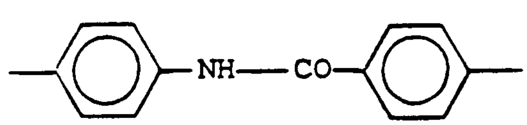

-$Ar^1$- oder
-$Ar^1$-X-$Ar^2$- ausgewählt sind,
in denen -$Ar^1$- und -$Ar^2$- gleiche oder verschiedene 1,2-Phenylen-, 1,3-Phenylen-, 1,4-Phenylenreste oder ($C_6$-$C_{14}$)-Arylenreste, die durch eine oder mehrere ($C_1$-$C_6$)-Alkyl-, ($C_1$-$C_6$)-Alkoxy- oder $CF_3$-Gruppen oder Halogen, insbesondere Fluor-, Chlor- oder Bromatome, substituiert sein können oder einen heteroaromatischen Rest, beispielsweise einen [2,5]- oder [3,4]-Furanorest bedeuten
und der Rest -X-

a) eine direkte Bindung ist oder einen der folgenden zweiwertigen Reste darstellt
-O-, -$C(CF_3)_2$-, -$SO_2$-, -CO-, -$C(R^6)_2$-, in dem $R^6$ Wasserstoff oder eine ($C_1$-$C_6$)-Alkyl- oder ($C_1$-$C_4$)-Fluoralkylgruppe ist, oder
b) -Y-$Ar^1$-Y-, in dem -Y- der Rest -O- oder -$C(CH_3)_2$- ist,
oder
c) -O-$Ar^1$-Q-$Ar^2$-O-, in der -Q- die unter Xa) angegebene Bedeutung hat.

Die Herstellung der Polyaramide, welche sich als Trägermaterialien und als Schichtmaterialien für die erfindungsgemäßen Membranen eignen, werden in der DE-A-39 03 098 und der DE-A-3 802 030 beschrieben.
Als Ausgangsmaterialien für deren Herstellung eignen sich beispielsweise

a) Dicarbonsäuredichloride der Formel (IV)

$$Cl - CO - E^2 - CO - Cl \qquad (IV)$$

wobei $E^1$ die vorstehend angegebene Bedeutung hat.
Beispiele für Verbindungen der Formel (IV) sind
4,4'-Diphenylsulfondicarbonsäuredichlorid,
4,4'-Diphenyletherdicarbonsäuredichlorid, 4,4'-Diphenyldicarbonsäuredichlorid,
2,6-Naphthalindicarbonsäuredichlorid, Isophthalsäuredichlorid,
2,5-Furandicarbonsäuredichlorid, insbesondere aber Terephthalsäuredichlorid und substituiertes Terephthalsäuredichlorid, z.B. 2-Chlor-terephthalsäuredichlorid;

b) aromatisierte Diamine der Formel (V)

$$H_2N-E^2-NH_2 \qquad (V)$$

beispielsweise m-Phenylendiamine bzw. substituierte Phenylendiamine, z.B. 2-Chlor-, 2,5-Dichlor- oder 2-Methoxy-p-phenylendiamin, insbesondere p-Phenylendiamin, sowie
substituierte Benzidinderivate, beispielsweise 4,4'-Diaminobenzophenon, Bis-[4-aminophenyl]-sulfon, Bis-[4-(4'-aminophenoxy)phenyl]-sulfon, 1,2-Bis-[4'-aminophenoxy]-benzol, 1,4-Bis-[(4'-aminophenyl)-isopropyl]-benzol, 2,2'-Bis-[4-(4'-aminophenoxy)phenyl]-propan, insbesondere 1,4-Bis-(4'-aminophenoxy)-benzol, und Gemische der genannten Diamine.

Bei den erfindungsgemäßen semipermeablen Membranen können sowohl das Trägermaterial, als auch die semipermeable Schicht beide aus dem gleichen Polyetherketon oder aus verschiedenen Polyetherketonen der Formel (Ia) und (Ib) bzw. aus dem gleichen Polyaramid oder aus verschiedenen Polyaramiden der Formel (II) oder aber auch Trägermaterial und Schichtmaterial aus unterschiedlichen Materialien bestehen.

Insbesondere vorteilhaft ist es, wenn das Trägermaterial sich von einem Polyphenylensulfid mit den wiederkehrenden Struktureinheiten der Formel (III) ableitet.

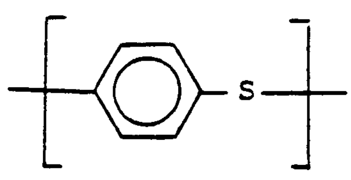

Für die erfindungsgemäßen Membranen werden die vorstehend genannten Polyaramide, Polyetherketone und Polyphenylensulfide in Form von Vliesen oder Geweben, vorzugsweise als Vliese eingesetzt.

Zur Herstellung der erfindungsgemäßen Membranen wird das Polymere zunächst gelöst, filtriert und

entgast. Als Lösungsmittel für Polyetherketone eignen sich z.B. $H_2SO_4$, $CF_3$-$SO_3H$, HF, $Cl_2HC$-COOH und besonders Mischungen von $Cl_2HC$-COOH und $H_2SO_4$, für Polyaramide insbesondere N-Methylpyrrolidon, N,N-Dimethylacetamid, Dimethylsulfoxid und Dimethylformamid. Aus diesen Lösungen wird in bekanner Weise nach dem Phaseninversionsverfahren (Robert E. Kesting, "Synthetic Polymeric Membranes", 2nd Ed., 1985, S. 237 ff.) eine semipermeable Membran hergestellt. Zu diesem Zweck wird die Polymerlösung auf dem Trägermaterial als flüssige Schicht ausgebreitet. Danach läßt man auf die flüssige Schicht Fällflüssigkeit einwirken, die mit dem Lösungsmittel mischbar ist, in der aber die in der Polymerlösung gelösten Polymere unlöslich sind und als semipermeable Membran ausgefällt werden. Als Fällflüssigkeit wird beispielsweise Wasser verwendet.

Bei der Verfahrensdurchführung läßt man die Fällflüssigkeit vorteilhaft so lange auf die durch diese ausgefällte Membran einwirken, bis aus dieser praktisch das gesamte Lösungsmittel durch Fällflüssigkeit ersetzt ist. Danach wird die gebildete Membran von Fällflüssigkeit befreit, beispielsweise dadurch, daß man die Membran direkt in einem Luftstrom trocknet oder aber zunächst mit einem Weichmacher wie Glycerin behandelt und danach trocknet.

Die Dicke der erfindungsgemäßen Membranen mit Trägerschicht liegt im Bereich von 150 bis 350 $\mu$m, insbesondere von 200 bis 300 $\mu$m. Die Dicke der semipermeablen Schicht beträgt dabei 20 bis 150 $\mu$m, vorzugsweise 50 bis 100 $\mu$m.

Die erfindungsgemäßen Membranen können in Form von Flach- oder Schlauchmembranen, insbesondere in Form von Flachmembranen, hergestellt werden. Verfahren zur Herstellung dieser Membranen sind aus dem Stand der Technik bekannt.

Die erfindungsgemäßen Membranen bestehen aus einem Trägermaterial aus Polyetherketon, Polyphenylensulfid oder Polyaramid, vorzugsweise aus Polyphenylensulfid, und einer semipermeablen Schicht aus einem Polyetherketon oder einem Polyaramid und zeichnen sich durch ihre hohe chemische, mechanische und thermische Beständigkeit aus. So sind Membranen mit Polyphenylensulfid als Trägermaterial und Polyetherketonen als semipermeable Schicht bis über 200 ° C beständig. Membranen mit Polyaramiden als semipermeabler Schicht und als Trägermaterial oder mit Polyphenylensulfid als Trägerschicht können bevorzugt in solchen Bereichen eingesetzt werden, wo eine besonders hohe Resistenz gegen agressive Medien gefordert ist. So werden derartige Membranen, beispielsweise auch bei erhöhten Temperaturen, nicht von Säuren, Laugen oder organischen Lösungsmitteln, wie Chlorbenzol und Methanol oder oxidierenden Agenzien, wie z.B. Natriumhypochlorid, angegriffen. Die Trennleistung der Membran, ihre Selektivität, als auch ihre mechanische Stabilität bleiben auch nach diesen extremen Belastungen erhalten. Sie zeichnen sich ferner durch eine hohe Resistenz gegenüber enzymatischem und mikrobiellem Angriff aus, wodurch sie sich insbesondere sehr gut für die Aufarbeitung von Medien aus der Biotechnologie eignen. Ein weiterer vielversprechender Einsatz der erfindungsgemäßen Membranen ist bei der Abtrennung von Rhodium-Katalysatoren in der Oxosynthese zu sehen (Hydroformylierung von Olefinen zu Aldehyden).

Anhand der nachfolgenden Ausführungsbeispiele werden die Vorteile der erfindungsgemäßen Membranen noch verdeutlicht.

Beispiele

Polyaramidmembranen

Beispiele 1 bis 7

Für die in den Beispielen untersuchten Membranen wurde in N-Methylpyrrolidon (NMP) als Lösemittel das Polyaramid IIA aus:
> 95 mol-% Terephthalsäuredichlorid (TPC)
25 mol-% para-Phenylendiamin (PPD)
50 mol-% 3,3'-Dimethylbenzidin (DMB) und
25 mol-% 1,4-Bis-(4-aminophenoxy)-benzol (BAPOB)
durch eine Polykondensationsreaktion bei 50 ° C hergestellt.

In gleicher Weise wird das Polyaramid IIB aus:
> 95 mol-% TPC und
100 mol-% 2,2'-Bis-[4-(4'-aminophenoxy)-phenyl]-propan
hergestellt.

Nach der Neutralisation mit 100 mol-% CaO werden die viskosen Lösungen direkt filtriert und entgast oder noch unter Rühren mit festem Poly-N-vinylpyrrolidon versetzt und so eine Polymerlegierung hergestellt. Die resultierenden klaren Lösungen mit verschiedenen Staudinger-Indices und verschiedenen Konzentrationen werden dann mit einer Gießvorrichtung auf einen Träger (Vlies oder Gewebe) aufgebracht. Die Ausfällung der Membranen erfolgt in Wasser bei 5 bis 20 ° C. Die Membranen werden dann mit einer 40 bis 50 %igen Glycerinlösung getränkt und bei 50 ° C getrocknet. Die Membranen besitzen je nach der Trägerstärke eine Dicke zwischen 150 und 350 µm.

Tabelle 1

| Trägermaterial * | Dauergebrauchstemperatur (°C) | chemische Stabilität, Bemerkungen |
|---|---|---|
| Polypropylen (PP) | 110 | sehr gute pH-Stabilität, ab 60°C Quellung bei Kontakt mit aromatischen und halogenierten KW Δ |
| Polyethylenterephthalat (PET) | 140 | unbeständig gegen starke Säuren und Laugen, CKW + und org. Lösemittel bei erhöhten Temperaturen |
| Polyphenylensulfid | 220 | unlöslich in Lösemitteln < 200°C sehr gute Chemikalien- und Oxidationsbeständigkeit |
| Polyetherketon (PEK) | 260 | chemisch sehr beständig, außer gegen starke wasserfreie Säuren |
| Polyaramid (PA) | 180 | extreme Lösemittelbeständigkeit > > 100°C, wird von starken konz. Oxidationsmitteln, starken Laugen und Säuren angegriffen |

* Vliese oder Gewebe
Δ KW: Kohlenwasserstoffe
\+ CKW: Chlorkohlenwasserstoffe

Tabelle 2

| Beispiel | Polyaramid/ Trägermaterial | [$\eta$] (ml/g) | Polymerkon- zentration (Gew.-%) | Wasserfluß ($l/m^2h$) Δ | Rückhalt (%) Δ | Permeatfluß ($l/m^2h$) Δ | Dicke ($\mu m$) |
|---|---|---|---|---|---|---|---|
| 1 | IIA/PET * | 190 | 7 | 130 | 92 (T 10) | 68 | 280 |
| 2 | IIA/PPS * | 190 | 7 | 100 | 88 (T 10) | 55 | 180 |
| 3 +Δ | (wie Bsp. 1) | | | - | - | - | - |
| 4 + | (wie Bsp. 2) | | | 96 | 86 (T 10) | 60 | 200 |
| 5 | IIB/PPS | 130 | 7,5 | 2700 | 63 (K 30)<br>9 (T 10) | 40<br>190 | 290 |
| 6 | IIB/PPS | 130 | 10 | 1020 | 88 (K 30)<br>17 (T 10) | 35<br>140 | 305 |
| 7 | IIB/PPS | 130 | 15 | 190 | 96 (K 30)<br>80 (T 10) | 35<br>80 | 330 |

* thermische Nachbehandlung: 30 min in Wasser bei 80°C
\+ alkalische Behandlung: 24 h in NaOH 2 %ig bei 70°C
Δ PET Vlies löst sich auf, Membrane kann nicht mehr eingesetzt werden.
Daten wurden in einer Amicon-Rührzelle bei 400 UPM und 3 bar ermittelt
T 10 = Testsubstanz: Dextran (Pharmacia), Molekulargewicht (MW) = 10000, 1%ig
K 30 = Testsubstanz: Polyvinylpyrrolidon (BASF), MW = 49000, 2%ig

Unter Staudinger-Index [$\eta$] (Grenzviskosität, intrinsic viscosity) wird der Ausdruck

$$\lim_{c_2 \to 0} \frac{\eta_{sp}}{c_2} = [\eta]$$

verstanden, wobei

$\eta_{sp}$ = spezifische Viskosität = $\eta/\eta_1$-1
$c_2$ = Konzentration des gelösten Stoffes
$\eta$ = Viskosität der Lösung
$\eta_1$ = Viskosität des reinen Lösemitts

Beispiele 8 bis 10

Membranen aus dem Polyaramid IIA, Polyetherketon (Ia, b) oder Polyphenylensulfid (III) als Trägermaterialien lassen sich auch für einen Einsatz in organischen Medien verwenden. So können mit den erfindungsgemäßen Membranen beispielsweise Edelmetallkatalysatoren aus Lösungen die bei der Oxosynthese anfallen abgetrennt werden. Die Separationen werden dabei in Überströmungszellen aus Edelstahl durchgeführt.

| Bsp. | Polyaramid/ Träger | Betriebstemperatur (°C) | Permeatfluß (l/m²h) | Katalysator Rückhalt |
|---|---|---|---|---|
| 8 | IIA/PET* | 40 | 14 | 70 |
| 9 | IIA/PPS | 40 | 12 | 68 |
| 10 | IIA/PPSΔ | 110 | 32 | 55 |

* die Polyaramidmembran auf PET ist bis zu 40°C anwendbar
Δ die Polyaramidmembran auf PPS ist bis weit über 100°C stabil

Polyetherketonmembranen

Beispiele 11 bis 15

Für die Herstellung einer Polyetherketonmembran (PEK als semipermeable Schicht) werden 120 g eines Polyetherketons (Ib) in 880 g 96%iger $H_2SO_4$ bei ca. 30°C unter Rühren gelöst. Nach ca. 12 h wird die Lösung filtriert und entgast. Die Herstellung von Membranen erfolgt wie unter den Beispielen 1 bis 7 für Polyaramidmembranen beschrieben.

| Bsp. | PEK (Ib)/ Trägermaterial | Wasserfluß (l/m²h) | Rückhalt (%) | Permeatfluß (l/m²h) | Dicke (µm) |
|---|---|---|---|---|---|
| 11 | PEK (Ib)/PP | 200 | 97 (K 30) | 36 | 360 |
| 12 | PEK (Ib)/PET | 175 | 96 (K 30) | 34 | 350 |
| 13 | PEK (Ib)/PPS | 120 | 97 (K 30) | 38 | 230 |
| 14 + Δ | (wie Bsp. 11) | - | - | - | - |
| 15 Δ | (wie Bsp. 12) | 80 | 99 (K 30) | 20 | 240 |

\+ PET Vlies löst sich auf, die Membrane kann nicht mehr eingesetzt werden
Δ alkalische Behandlung: 24 h in NaOH 2 %ig bei 70°C

**Patentansprüche**

1. Semipermeable Membran für die Micro-, Nano- und Ultrafiltration bestehend aus einem Trägermaterial

und einer auf diesem haftenden semipermeablen Schicht, dadurch gekennzeichnet, daß das Trägermaterial ein Gewebe oder ein Vlies auf der Basis eines Polyphenylensulfids, eines Polyetherketons oder eines Polyaramids ist.

2. Semipermeable Membran nach Anspruch 1, dadurch gekennzeichnet, daß die semipermeable Schicht aus einem Polyetherketon mit den folgenden wiederkehrenden Einheiten der Formel (Ia) besteht

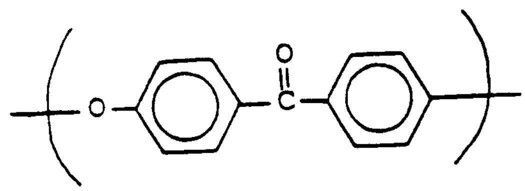

(Ia)

3. Semipermeable Membran nach Anspruch 1, dadurch gekennzeichnet, daß die semipermeable Schicht aus einem Polyetherketon mit den folgenden wiederkehrenden Einheiten der Formel (Ib) besteht:

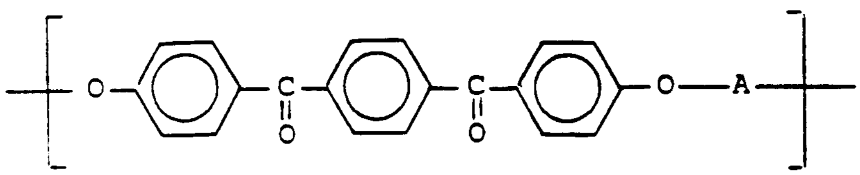

(Ib)

wobei -A- für

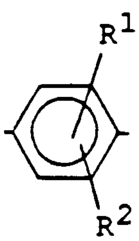

oder

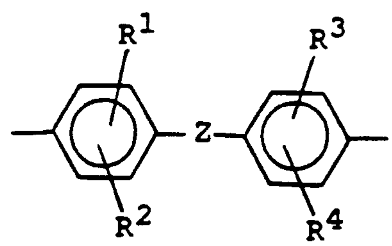

| | |
|---|---|
| $R^1$, $R^2$, $R^3$ und $R^4$ | gleich oder verschieden sein können und Wasserstoff, eine $(C_1\text{-}C_4)$-Alkyl-,$(C_6\text{-}C_{14})$-Aryl- oder $(C_6\text{-}C_{14})$-Oxyaryl-Gruppe oder $NO_2$, CN, $NR_2^5$ ($R^5$ = $(C_1\text{-}C_6)$-Alkyl) oder Halogen bedeuten und |
| -Z- | eine der Gruppierungen |

-O-, -S-, $-CH_2-$, 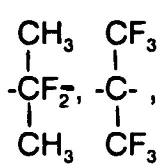 $-SO_2-$ oder -CO-

bedeutet.

4. Semipermeable Membran nach Anspruch 1, dadurch gekennzeichnet, daß die semipermeable Schicht aus einem aromatischen Homo- oder Copolyamid mit mindestens einer der wiederkehrenden Struktureinheiten der Formel (II) besteht

$$-(\overset{O}{\overset{\|}{C}} - E^1 - \overset{O}{\overset{\|}{C}} - NH - E^2 - NH)- \qquad (II)$$

worin $-E^1-$ und $-E^2-$ gleich oder verschieden sind und aus einer oder mehreren der Gruppierungen

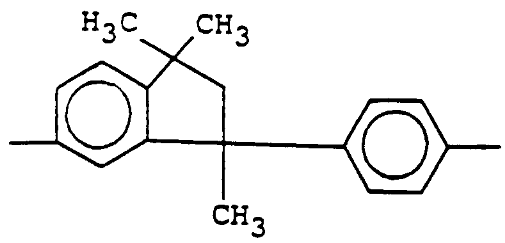

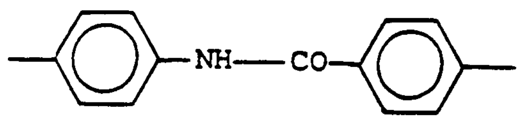

$-Ar^1-$
oder
$-Ar^1-X-Ar^2-$
ausgewählt sind, in denen $-Ar^1-$ und $-Ar^2-$ gleiche oder verschiedene 1,2-Phenylen-, 1,3-Phenylen-, 1,4-Phenylenreste oder $(C_6-C_{14})$-Arylenreste, die durch eine oder mehrere $(C_1-C_6)$-Alkyl-, $(C_1-C_6)$-Alkoxy- oder $CF_3$-Gruppen oder Halogen, insbesondere Fluor, Chlor oder Brom, substituiert sein können, oder einen heteroaromatischen Rest bedeuten und der Rest X

a) eine direkte Bindung ist oder einen der folgenden zweiwertigen Reste darstellt
-O-, $-C(CF_3)_2-$, $-SO_2-$, -CO-, $-C(R^6)_2-$, in dem $R^6$ Wasserstoff oder eine $(C_1-C_6)$-Alkyl- oder eine $(C_1-C_4)$-Fluoralkylgruppe ist oder

b) $-Y-Ar^1-Y-$, in dem -Y- der Rest -O- oder $-C(CH_3)_2-$ ist,
oder

c) $-O-Ar^1-Q-Ar^2-O-$, in der Q die unter Xa) angegebene Bedeutung hat.

**5.** Semipermeable Membran nach Anspruch 2 oder 3, dadurch gekennzeichnet, daß das Trägermaterial und die semipermeable Schicht beide aus dem gleichen Polyetherketon oder aus verschiedenen Polyetherketonen mit den wiederkehrenden Einheiten der Formel (Ia) oder (Ib) oder aus dem gleichen Polyaramid oder aus verschiedenen Polyaramiden der Formel (II) bestehen.

**6.** Semipermeable Membran nach Anspruch 1, dadurch gekennzeichnet, daß das Trägermaterial ein Vlies oder ein Gewebe auf der Basis eines Polymers mit den wiederkehrenden Einheiten der Formel (Ia) oder (Ib) oder der Formel (II) ist.

**7.** Semipermeable Membran nach Anspruch 1, dadurch gekennzeichnet, daß das Trägermaterial ein Polyphenylensulfid mit den wiederkehrenden Struktureinheiten der Formel (III) ist.

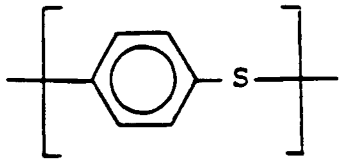

8. Verfahren zur Herstellung einer semipermeablen Membran nach Anspruch 1, dadurch gekennzeichnet, daß die Polymeren zunächst in einem Lösemittel gelöst, filtriert und entgast werden und in einem darauffolgenden Schritt nach dem Phaseninversionsverfahren eine Membran hergestellt wird und als Lösemittel für Polyetherketone $H_2SO_4$, $CF_3$-$SO_3H$, HF, $Cl_2HC$-COOH oder eine Mischung von $Cl_2HC$-COOH und $H_2SO_4$ und für Polyaramide N-Methylpyrrolidon, Dimethylacetamid oder Dimethylformamid eingesetzt werden.

9. Semipermeable Membran nach Anspruch 1, dadurch gekennzeichnet, daß es eine Flach- oder eine Schlauchmembran ist.

Europäisches Patentamt

# EUROPÄISCHER RECHERCHENBERICHT

Nummer der Anmeldung

EP 92 10 3192
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | EP-A-0 077 691 (E.I. DU PONT DE NEMOURS AND COMP ) * Anspruch 1; Beispiele 30-32 * * Beispiele 37,41,42 * * Seite 3, Zeile 29 - Zeile 35 * --- | 1,4-6,8, 9 | B01D69/10 B01D71/52 B01D71/56 B01D67/00 |
| X | EP-A-0 383 521 (EXXON RESEARCH AND ENGINEERING COMP) * Zusammenfassung * * Seite 3, Zeile 55 - Seite 4, Zeile 1; Tabelle 1 * --- | 1,6,9 | |
| X | PATENT ABSTRACTS OF JAPAN vol. 12, no. 33 (C-472)(2880) 30. Januar 1988 & JP-A-62 180 702 ( TORAY IND INC ) 8. August 1987 * Zusammenfassung * & WORLD PATENTS INDEX LATEST Week 8737, Derwent Publications Ltd., London, GB; AN 87-260675 * Zusammenfassung * --- | 1,6,9 | **RECHERCHIERTE SACHGEBIETE (Int. Cl.5 )** |
| X | EP-A-0 382 356 (IMPERIAL CHEMICAL INDUSTRIES PLC ) * Zusammenfassung; Ansprüche 1-3,5,7; Abbildung 1 * * Seite 3, Zeile 43 - Zeile 46 * * Seite 4, Zeile 20 - Zeile 29; Beispiel 41 * --- | 1-3,5,8, 9 | B01D |
| X | WO-A-9 003 210 (TORAY IND INC) 5. April 1990 * Zusammenfassung; Ansprüche 1,10 * | 1,7,9 | |
| P | & EP-A-0 417 287 (TORAY IND INC) 20. März 1991 * Seite 6, Zeile 3 - Zeile 6 * --- | | |
| P,A | EP-A-0 427 079 (HOECHST AG) 15. Mai 1991 * Zusammenfassung; Ansprüche 1,5,8; Beispiel 2 * | 3,8 | |
| P,D | & DE-A-3 936 997 (HOECHST AG) --- -/-- | | |

Der vorliegende Recherchenbericht wurde für alle Patentansprüche erstellt

| Recherchenort | Abschlußdatum der Recherche | Prüfer |
|---|---|---|
| DEN HAAG | 07 MAI 1992 | HOORNAERT P.G.R. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)

Europäisches Patentamt

# EUROPÄISCHER RECHERCHENBERICHT

Nummer der Anmeldung

EP 92 10 3192
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 382 009 (HOECHST AG)<br>* Zusammenfassung; Ansprüche 1,213; Beispiele 1-7 * | 4,8 | |
| D | & DE-A-3 903 098 (HOECHST AG)<br>--- | | |
| A | DE-C-3 928 934 (SARTORIUS GMBH)<br>* das ganze Dokument *<br>----- | 5 | |
| | | | RECHERCHIERTE SACHGEBIETE (Int. Cl.5 ) |

Der vorliegende Recherchenbericht wurde für alle Patentansprüche erstellt

| Recherchenort | Abschlußdatum der Recherche | Prüfer |
|---|---|---|
| DEN HAAG | 07 MAI 1992 | HOORNAERT P.G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)